# EUROPÄISCHE PATENTSCHRIFT

(11) **EP 3 921 595 B1**
(45) Veröffentlichungstag und Bekanntmachung des Hinweises auf die Patenterteilung: **06.03.2024**
(21) Anmeldenummer: 20721404.0
(22) Anmeldetag: 09.04.2020
(51) Int. Cl.: G01B 11/02, G01B 11/06, G01B 11/245, G01B 11/27, G01B 21/04, G01N 21/84, G01N 21/93, G01N 21/952

(54) **VERFAHREN ZUR KALIBRIERUNG EINER THZ-MESSVORRICHTUNG, THZ-MESSVERFAHREN SOWIE ENTSPRECHENDE THZ-MESSVORRICHTUNG**
METHOD FOR CALIBRATING A THZ MEASURING APPARATUS, THZ MEASURING METHOD AND CORRESPONDING THZ MEASURING APPARATUS
PROCÉDÉ D'ÉTALONNAGE D'UN DISPOSITIF DE MESURE THZ, PROCÉDÉ DE MESURE THZ ET DISPOSITIF DE MESURE THZ CORRESPONDANT

(30) Priorität: 09.04.2019 DE 102019109339
(43) Veröffentlichungstag der Anmeldung: 15.12.2021
(73) Patentinhaber: CiTEX Holding GmbH, 49324 Melle (DE)
(72) Erfinder: BÖHM, Roland, 48341 Altenberge (DE)
(74) Vertreter: Bremer, Ulrich
(86) Internationale Anmeldenummer: PCT/DE2020/100292
(87) Internationale Veröffentlichungsnummer: WO 2020/207540

(56) Entgegenhaltungen:
- DE-A1-102015 122 205
- DE-A1-102016 111 044
- JP-A- 2016 166 873

## Beschreibung

THz-Messverfahren dienen insbesondere der berührungsfreien Messung von Messobjekten aus z. B. Kunststoff oder Gummi, die nach ihrer Herstellung auf ordnungsgemäße Schichtdicken und Durchmesser überprüft werden. Hierbei können z. B. Extrusionserzeugnisse, insbesondere zylindrische Körper wie Rohre, vollumfänglich und berührungsfrei vermessen werden, indem sie durch eine THz-Messvorrichtung mit um einen Messraum herum angeordneten THz-Sensoren geführt werden. Die THz-Sendestrahlen der einzelnen THz-Sensoren werden an den Grenzflächen der Schichten jeweils teilweise reflektiert, so dass die senkrecht zu den THz-Sensoren zurück reflektierten THz-Reflexionsstrahlen detektiert werden können, und somit Abstände und Schichtdicken aus einer Laufzeit der THz-Strahlung ermittelt werden können. Hierbei sind unterschiedliche Sensorprinzipien bekannt, z.B. vollelektronisch als Dipole oder mit optischen Hilfsmitteln wie Kurzzeitlasern, wobei die THz-Sensoren insbesondere als THz-Transceiver zum Senden und Detektieren der THz-Strahlung ausgebildet sein können, und die Messungen als direkte Laufzeitmessungen, oder auch in Frequenzmodulation, z. B. als FMCW-Radar-THz-Sensoren, oder mittels gepulster Strahlung ausgeführt werden können.

Die Signaleinkopplung ist idealerweise senkrecht zur zu vermessenden Oberfläche des Messkörpers vorgesehen, um eine hohe Rückkopplung des Signals zu erzielen, auch da an den Grenzflächen z. B. nur etwa 1 bis 5 % der Intensität zurückreflektiert werden und somit nur bei hinreichend senkrechtem Einfall die äußeren und die inneren Grenzflächen des Messkörpers sicher erfasst werden können. Insbesondere bei Körpern mit gekrümmter Oberfläche wie zylindrischen Körpern, z. B. Rohren, führen Winkelfehlstellungen zu einem seitlichen Reflektieren der THz-Strahlung, welche die resultierende Signalamplitude verringert, bis hin zu einer völligen Fehlmessung. Insbesondere bei einer Durchmessbarkeit von Wanddicken des zu vermessenden Messobjektes führen bereits geringe Fehlstellungen an jeder Grenzfläche zu unerwünschten Umlenkungen des Messsignals.

Zur Vermessung eines extrudierten Rohres kann z. B. ein Messraum mit vier oder mehr THz-Sensoren vorgesehen sein, die in einer Umfangsrichtung auf einer Messaufnahme (Messtisch) angeordnet und radial in das Zentrum der Messaufnahme gerichtet sind. Wenn das Messobjekt somit kreiszylindrisch ausgebildet ist und zentral durch den Messraum geführt wird, sind sehr genaue Messungen möglich. Insbesondere extrudierte Produkte sind jedoch zunächst weich und deformierbar und werden oftmals deplatziert bzw. nicht zentral durch den Messraum geführt.

Die Messaufnahme bzw. der Messtisch dient somit insbesondere zur Aufnahme der THz-Sensoren und kann insbesondere kreisförmig ausgebildet sein.

Um Fehlpositionierungen des Messobjektes im Messraum zu kompensieren, sind mechanische Verstellungen des Messobjektes durch die Führungseinrichtung, sowie auch mechanische Verstellungen der Messvorrichtung relativ zum Messobjekt bekannt. Allerdings ist die genaue Feststellung der Fehlstellung aus den Messsignalen wiederum oftmals nur indirekt möglich, da eine Unregelmäßigkeit in den Messwerten zum einen auf Änderungen des Produkts und zum anderen auf Fehlpositionierungen des ordnungsgemäßen Produkts zurückgeführt werden können, wobei weiterhin eine mechanische Nachführung des Messobjektes aufwändig ist, auch da die Führungseinrichtungen keine allzu hohen Kräfte auf das noch weiche Material des Messobjektes ausüben sollten. Somit wird oftmals die gesamte THz-Messvorrichtung relativ zum Messobjekt verstellt, wozu motorische Antriebe z.B. 100 kg Messplatte, Sensorik, Kabel usw. verstellen.

Weiterhin weichen Rohre oftmals in ihrer Außenform bedingt durch Ovalität und Abflachungen von der runden Außenform ab, wobei derartige Ovalitäten zum Teil aber auch zulässig sind und z.B. eine Ovalität in der Außenform nicht sofort zu einer Fehlermeldung führen sollte, sondern weiterhin eine genaue Vermessung der Schichtdicken erfordert, die jedoch durch die Messvorrichtungen dann oftmals nicht mehr ausführbar ist. Auch können Sensoren mit Fokussierungen und Optiken oftmals durch die Messaufnahme nicht mehr korrekt eingestellt werden, so dass dies zu nicht-senkrechten Ausrichtungen und auch Fehllagen des Fokuspunktes führt.

Die DE 10 2015 122 205 A1 beschreibt ein Verfahren und eine THz-Messvorrichtung zum Messen einer Schichtdicke und/oder eines Abstandes, wobei mindestens ein THz-Strahl von einer THz-Sende- und Empfangseinheit auf ein Messobjekt eingestrahlt wird und von mindestens einer Schicht reflektierte THz-Strahlung detektiert wird. Aus einem Laufzeit-Unterschied kann nachfolgend die Schichtdicke ermittelt werden. Es werden mehrere Messungen mit unterschiedlichen optischen Achsen durchgeführt, wobei die optische Achse während oder zwischen den Messungen verstellt wird und eine der mehreren Messungen zur Ermittlung der Schichtdicke herangezogen wird.

Die DE 10 2016 111 044 A1 beschreibt eine THz-Messvorrichtung zum Vermessen eines Prüfobjekts durch eine Laufzeitmessung. Hierbei ist eine aktive THz-Sende- und Empfangseinheit zum Aussenden und Detektieren von an dem Prüfobjekt reflektierter THz-Strahlung vorgesehen, wobei ein oder mehrere passive THz-Empfangseinrichtungen mit zu der optischen Achse der THz-Sende- und Empfangseinheit versetzten optischen Achsen vorgesehen sind und an dem Prüfobjekt reflektierte THz-Strahlung detektieren. Aus den Messsignalen und einem Synchronisationssignal kann eine zweite Laufzeit und ein zweiter Abstand des Messobjektes zu der mindestens einer weiteren THz-Empfangseinrichtung ermittelt werden.

Der Erfindung liegt daher die Aufgabe zugrunde, ein Kalibrierverfahren für eine THz-Messvorrichtung, ein THz-Messverfahren unter Einbeziehung des Kalibrierverfahrens sowie eine THz-Messvorrichtung zu schaffen, die mit relativ geringem Aufwand eine sichere Kalibrierung der THz-Messvorrichtung ermöglichen.

Diese Aufgabe wird durch ein Kalibrierverfahren, ein THz- Messverfahren sowie eine THz-Messvorrichtung nach den unabhängigen Ansprüchen gelöst. Die Unteransprüche beschreiben bevorzugte Weiterbildungen.
Das erfindungsgemäße Verfahren zur Kalibrierung und das THz- Messverfahren unter Einbeziehung des Kalibrierverfahrens können insbesondere mit der erfindungsgemäßen THz-Messvorrichtung durchgeführt werden.

Somit sind die THz-Sensoren in der THz-Messaufnahme schwenkbar aufgenommen und können bei der Kalibrierung auf ein durch die Messvorrichtung geführtes Messobjekt eingestellt werden.

Hierbei sind die THz-Sensoren auf einer kreisförmigen Umfangslinie der Messaufnahme angeordnet und individuell und unabhängig voneinander schwenkbar. Jeder THz-Sensor kann somit für sich geschwenkt werden, um die THz-Messvorrichtung auf das Messobjekt einzustellen. Die Schwenkachse der THz-Sensoren liegt vorzugsweise auf der kreisförmigen Umfangslinie und verläuft senkrecht zu einer durch diese Umfangslinie definierten Messebene, und/oder die Schwenkachsen verlaufen jeweils parallel zu einer Symmetrieachse bzw. Förderrichtung der Messobjektes.

Die THz-Sensoren sind insbesondere in einer Messebene angeordnet, wobei ihre Sensorachsen in der Messebene verlaufen, und ihre Schwenkachsen jeweils senkrecht auf der Messebene stehen zur Verstellung in der Messebene, vorzugsweise ohne weitere translatorische oder rotatorische Verstellbarkeit.

Die Messebene kann insbesondere durch die mehreren THz-Sensoren und die Messaufnahme definiert ist, d. h. insbesondere sind sämtliche THz-Sensoren in der gleichen Messebene schwenkbar.

Grundsätzlich kann der Rotationspunkt bzw. die Schwenkachse des THz-Sensors aber auch etwas außerhalb der genauen Kreisumfangs-Linie liegen, insbesondere bei nachfolgender Berücksichtigung der Koordinaten der Schwenkachse relativ zu der Messvorrichtung bzw. in der Messebene.

Somit ist vorteilhafterweise vorgesehen, nicht die gesamte Messaufnahme zum Beispiel in XY-Koordinaten in der Messebene translatorisch zu verstellen, und vorteilhafterweise auch nicht das Messobjekt entsprechend in der Messebene nachzuführen, um es im Messraum zu zentrieren, sondern die THz-Sensoren individuell in ihrer Sensoraufnahme zu schwenken, um hierdurch die beste Platzierung und Positionierung zu erreichen. Insbesondere soll hierdurch erreicht werden, dass die Sensorachsen jedes THz-Sensors ganz oder weitgehend senkrecht zu einer Fläche des Messobjekts, insbesondere der Oberfläche, ausgerichtet sind.

Eine derartige Ausrichtung der einzelnen Sensorachsen kann unabhängig davon erfolgen, ob das Rohr ideal rund, oder aber zum Beispiel oval oder mit Flachstellen versehen ist. Somit führen insbesondere Deformationen wie z.B. Ovalitäten und Flachstellen des Messobjektes, die zum Teil zulässig sind und eine weitere Vermessung erfordern, nicht sofort zu einem Abbruch der Messung, sondern sie können sicher erfasst und durch senkrecht eingestellte Messsignale vermessen werden.
Ein weiterer Vorteil der Erfindung liegt darin, dass ein individuelles Verstellen, insbesondere Verschwenken, der THz-Sensoren schneller und sicherer erfolgen kann als eine translatorische Verstellung der gesamten Messaufnahme. Hierbei sind kleinere Massen zu verstellen, so dass auch Vibrationen usw. gering gehalten werden können. Ein individuelles Verschwenken der THz-Sensoren kann schnell und genau erfolgen, ohne die komplette Messaufnahme bzw. gesamte Messvorrichtung translatorisch verstellen zu müssen.

Hierbei ist grundsätzlich die Ausbildung eines einzigen Freiheitsgrades, d. h. insbesondere der Rotation um die zur Messebene senkrechte bzw. parallel zur Symmetrieachse verlaufende Sensor-Schwenkachse, bereits ausreichend, so dass wiederum eine einfache apparative Ausbildung und schnelle Verstellung möglich ist. Die einzelnen Verstellungen der Sensoren können zum Teil parallel erfolgen, so dass eine schnelle Verstellung sämtlicher THz-Sensoren der THz-Messvorrichtung möglich ist.

Die THz-Sensoren können optisch oder vorzugsweise vollelektronisch ausgebildet sein, und Messungen bzw. Abstandsmessungen als direkte Laufzeitmessungen der Laufzeit des ausgesandten THz-Sendestrahls und des reflektierten THz-Reflexionsstrahls durchführen, oder auch Messungen mit Frequenzmodulation, z. B. als FMCW -Radar-THz-Messverfahren; weiterhin sind entsprechend Messungen mit gepulster THz-Strahlung möglich. Der Frequenzbereich der THz-Sendestrahlen kann im Bereich der Terahertz-Radar- und Mikrowellenstrahlung liegen, insbesondere zwischen z. B. 5 GHz und 50 THz, z.B. 10 oder 30 GHz bis 5 oder 10 THZ, insbesondere 300 GHz bis 3 THz liegen.

Hierbei geben die THz-Sensoren den THz-Sendestrahl insbesondere in den Frequenzbereich von 5 THz bis 50 THz aus, wobei der untere Frequenzwert z. B. 5, 10, 30 oder 300 GHz ist, und
der obere Frequenzwert 3, 5, 10 oder 50 THz ist.

Erfindungsgemäß können auch THz-Sensoren mit Sensoroptiken, zum Beispiel fokussierenden Linsen aus z.B. Kunststoff oder Silizium vor den THz-Chips eingesetzt werden. Vorteilhaft sind insbesondere Ausbildungen mit vollelektronischen THz-Sensoren, d. h. insbesondere einem THz-Chip mit zum Beispiel vorgesetzter THz-Optik bzw. Sammellinse, da hierdurch eine geringe zu verstellende Masse bzw. zu verstellendes Trägheitsmoment ermöglicht wird, so dass sich vollelektronische THz-Sensoren sich mit der schwenkbaren Verstellung ideal ergänzen.

Das Kalibrierverfahren wird von einer Steuereinrichtung der THz-Messvorrichtung durchgeführt, die zentral ausgebildet sein kann und die Mess-Signale bzw. Signalamplituden der Sensoren aufnimmt und auswertet, oder die auch durch dezentrale Steuereinrichtungen in den Sensoren zusammen mit z.B. einer zentralen Steuereinheit ausgebildet werden kann.

Bei dem erfindungsgemäßen THz-Messverfahren zur Vermessung eines Messobjekts ist vorteilhafterweise vorgesehen, dass das Messobjekt fortlaufend entlang einer Förderrichtung, insbesondere entlang seiner Mittelachse und/oder der Symmetrieachse der THz-Messvorrichtung durch die THz-Messvorrichtung geführt wird, insbesondere orthogonal zur Messebene, zur fortlaufenden umfänglichen Vermessung des Messobjektes.

Gemäß einer bevorzugten Ausbildung werden die THz-Sensoren in zwei Sensorgruppen unterteilt, die sukzessive verstellt werden. Die Unterteilung der Sensoren kann insbesondere in Umfangsrichtung alternierend erfolgen, so dass jeder Sensor einer Gruppe jeweils zwischen zwei Sensoren der anderen Gruppe vorgesehen ist. Hierbei bildet z.B. die erste Sensorgruppe erst eine Ausgangsgruppe und die zweite Sensorgruppe eine Verstellgruppe, und nachfolgend umgekehrt. Der Gedanke ist hierbei, jeweils die Verstellung eines Sensors der Verstellgruppe, d.h. zunächst der zweiten Gruppe, durch die beiden benachbarten Sensoren der Ausgangsgruppe, d.h. zunächst der ersten Gruppe zu ermöglichen, und somit zunächst die Sensoren der Verstellgruppe zu verstellen; nachfolgend können dann wiederum die Sensoren der ersten Sensorgruppe in Abhängigkeit der Sensoren der zweiten Sensorgruppe in entsprechender Weise verstellt werden.

Gemäß einer bevorzugten Ausbildung wird als Ausgangsposition die symmetrische und zentrale Ausrichtung sämtlicher THz-Sensoren, d. h. radial zur Symmetrieachse bzw. Mittelpunkt des Messraums hin, gewählt. Eine derartige Ausbildung ermöglicht insbesondere auch eine schnelle Einstellbarkeit von einer standardisierten Position aus und unabhängig von der aktuellen Position des Messobjektes.

In einem ersten nachfolgenden Messschritt werden dann von den THz-Sensoren der ersten Sensorgruppe die Abstände zur Außenfläche des Messobjektes ermittelt, wodurch somit Vektoren bzw. Positionen von Abstandspunkten der Außenfläche ermittelt werden, die somit dem Schnittpunkt der Sensorachse mit der Außenfläche des Messobjektes entsprechen. Dieser Schritt kann somit zunächst ohne mechanische Verstellung der THz-Sensoren und schnell erfolgen. Aus den so ermittelten Abstandspunkten kann nachfolgend eine Winkelkorrektur der THz-Sensoren der zweiten Sensorgruppe ermittelt werden, indem jeweils von zwei aufeinanderfolgenden THz-Sensoren der ersten Sensorgruppe, d. h. zum Beispiel in Umfangsrichtung dem ersten und dritten THz-Sensor der Sensoranordnung, eine Winkelkorrektur des dazwischenliegenden THz-Sensors der zweiten Sensorgruppe ermittelt wird. Somit können die Winkelkorrekturen sämtlicher THz-Sensoren der zweiten Sensorgruppe gleichzeitig bzw. parallel ermittelt werden. Aus dieser Ermittlung kann bereits eine Winkelkorrektur der THz-Sensoren der zweiten Sensorgruppe mathematisch mit geringem Rechenaufwand ermittelt werden, und somit nachfolgend die THz-Sensoren der zweiten Sensorgruppe entsprechend durch eine relativ kleine Schwenkbewegung korrigiert werden.

Nachfolgend folgt dann auf Basis der korrigierten bzw. kompensierten THz-Sensoren der zweiten Sensorgruppe die entsprechende Korrektur bzw. Kompensation der THz-Sensoren der ersten Sensorgruppe, indem wiederum die Winkelkorrekturen individuell ermittelt werden und die Sensoren der ersten Sensorgruppe verstellt werden.

Dieses Verfahren kann nachfolgend iterativ wiederholt werden, um immer genauere Einstellungen zu erreichen; weiterhin oder alternativ können dann jedoch auch in einer Feinjustierung die einzelnen THz-Sensoren um ihre zuvor eingestellte Position in beide Richtungen um kleine Verstellwinkel geschwenkt werden, um durch den Vergleich der Messungen die größte Signalamplitude zu ermitteln, die dann als Beleg für eine genauere Ausrichtung entlang der Senkrechten herangezogen werden kann, da bei genau senkrechter Ausrichtung die Signalamplitude der reflektierten THz- Reflexionsstrahlen maximal ist. Hierbei können ein oder mehrere entsprechende Verstellwinkel in beide Richtungen eingestellt werden; im Allgemeinen reichen jedoch bereits ein Verstellwinkel in jede Richtung für die Feinjustierung.

Durch die erste Kalibrierung mit der alternierenden Ermittlung der Sensorgruppen zur Kompensation des jeweils dazwischenliegenden THz-Sensors der anderen Gruppe kann bereits die grobe Voreinstellung erfolgen, die sogar insbesondere bei Rohren mit weitgehend zylindrischer Form bereits ausreichend ist. So würde zum Beispiel eine Verstellung alleine nach dem Prinzip der Maximalwertermittlung bei größeren Abweichungen deutliche längere Verstellzeiten erfordern, als durch den Verstellschritt mit alternierenden Sensorgruppen und mathematischer Korrektur.

Somit ist eine schnelle, sichere und mit geringem apparativen Aufwand durchführbare Kalibrierung möglich, die ein THz-Messverfahren mit sehr genauer Vermessung von Abständen und Schichtdicken eines Messobjektes, zum Beispiel eines Rohrprofils ermöglicht. Somit kann das Messobjekt fortlaufend und kontinuierlich durch die Messebene der Messvorrichtung geführt und umfänglich vermessen werden, da eventuelle Korrekturen von den Sensoren individuell schnell durchgeführt werden können, was eine individuelle Anpassung zur situativen Rohroberflächenbeschaffenheit ermöglicht.

Somit ergänzt sich die erfindungsgemäße Kalibrierung in besonderer Weise mit der kontinuierlichen THz-Vermessung eines senkrecht durch die Messebene geführten Messobjektes auf Schichtdicken.

Die individuelle Verschwenkung der THz-Sensoren kann schnell und durch kleindimensionierte Schwenkvorrichtungen erfolgen, da die einzustellenden Schwenkwinkel gering sind. So können Kleinstmotoren zur Sensorverstellung verwendet werden, die schnell, mit geringer Masse und Energieverbrauch und fein einstellbar die Korrekturwinkel anpassen können. Die individuelle Schwenkung der THz-Sensoren ermöglicht den Einsatz führungsfreier Antriebssysteme, die wenige Gramm Schubkraft aufweisen.

Vorzugsweise ist jeder Sensor selbst auf einer Sensoraufnahme bzw. Konsole befestigt und zum Beispiel mit einer Steckverbindung an einer Trägerplatte elektrisch angeschlossen. Sollte somit ein THz-Sensor ausfallen, kann ein Sensormodul aus Sensor mit Verstelleinrichtung schnell und sicher ausgetauscht werden, ohne dass hierzu die gesamte Messvorrichtung stillgelegt und repariert werden muss.

Der Ausfall einer Achse, d. h. insbesondere eines THz-Sensors, lässt die anderen THz-Sensoren weiterhin arbeiten. Selbst wenn durch den Ausfall eines Sensors zum Beispiel die Kompensation des benachbarten Sensors der anderen Sensorgruppe ganz unmöglich sein sollte, kann dieser Sensor gegebenenfalls durch die individuelle Verschwenkung und Vergleich der Sensoramplituden gemäß dem Verfahren der Feinjustierung kompensiert werden. Es wird jedoch grundsätzlich bei Verlust eines THz-Sensors nicht die gesamte Messung des Messsystems verhindert.

Weiterhin ist der Bauraum der Messvorrichtung verkleinert, da nicht mehr der erhebliche Verfahrweg einer translatorischen Verstellung der gesamten Messaufnahme vorgesehen ist. Auch hierdurch wird das Package somit erheblich verkleinert. Auch entfallen große, aufwändige Energieführungsketten für die Messvorrichtung.

Zwar stellen die erfindungsgemäß vorgesehenen mathematisch- geometrischen Ermittlungen grundsätzlich Näherungen an ideale Positionen dar; es wird jedoch erkannt, dass hierdurch bereits mit geringem Aufwand eine sehr gute und schnelle Ausrichtung möglich ist, und diese Zeitersparnis bei einer kontinuierlichen Vermessung wiederum die Genauigkeit erhöht.

Die Erfindung wird im Folgenden anhand der beiliegenden Zeichnungen an einigen Ausführungsformen näher erläutert. Es zeigen:
- Fig. 1: einen THz-Sensor einer THz-Messvorrichtung gemäß einer Ausführungsform der Erfindung, in schwenkbarer Aufnahme;
- Fig. 2: eine Anordnung von THz-Sensoren auf einer Sensoraufnahme mit einer ersten Schwenkstellung eines THz-Sensors;
- Fig. 3: die Darstellung aus Fig. 2 mit einer weiteren Schwenkstellung des THz-Sensors;
- Fig. 4: eine THz-Messvorrichtung gemäß einer Ausführungsform der Erfindung mit einem als Messobjekt aufgenommenen Rohr im Schnitt durch die Symmetrieachse in Ausgangsposition;
- Fig. 5: einen der Fig. 4 nachfolgenden Verfahrensschritt unter Ermittlung von Sensor-Korrekturwinkeln der zweiten Sensorgruppe in Abhängigkeit von Abstandsmessungen der ersten Sensorgruppe;
- Fig. 6: einen der Fig. 5 nachfolgenden Schritt unter Ermittlung von Sensor-Korrekturwinkeln der ersten Sensorgruppe in Abhängigkeit der zweiten Sensorgruppe;
- Fig. 7: a) und b) die Vermessung eines ovalen Rohres als Messobjekt in der Ausgangsposition;
- Fig. 8: eine grafische Darstellung eines Auswertemusters zur Ermittlung einer Winkellagenkorrektur;
- Fig. 9: eine Seitenansicht einer Anordnung zur Herstellung eines Rohres mit einer THz-Messvorrichtung;
- Fig. 10: ein Flussdiagramm eines Verfahrens gemäß einer Ausführungsform der Erfindung.

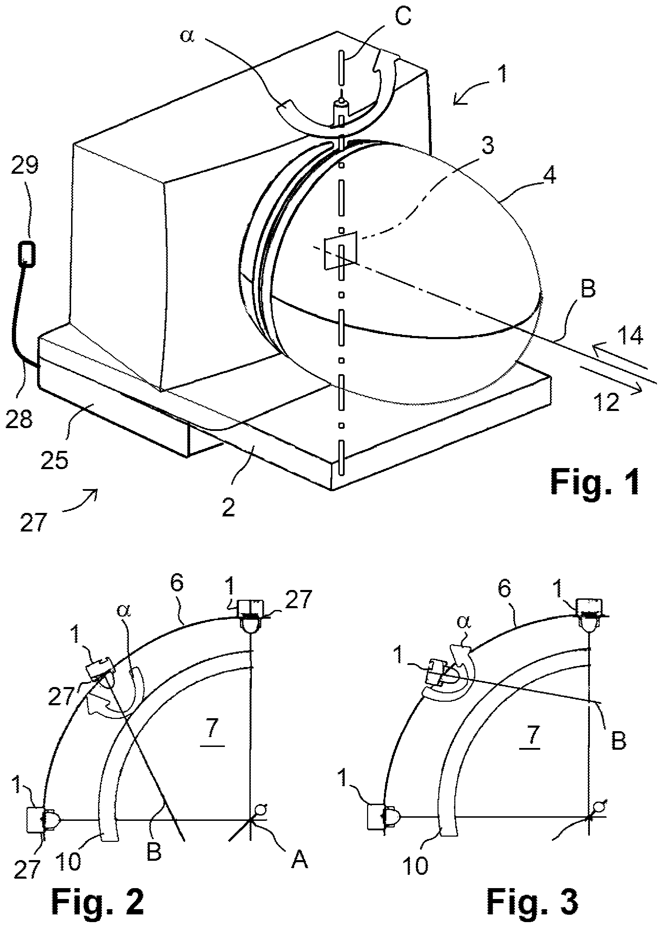

Figur 1 zeigt einen THz-Sensor 1 in einer Sensoraufnahme 2. Der THz-Sensor 1 kann insbesondere vollelektronisch ausgebildet sein, d. h. insbesondere als Dipol, mit einem THz-Chip 3, der THz-Strahlung abgibt, die durch eine THz-Linse 4 gebündelt wird, so dass der THz-Sensor 1 einen THz-Sendestrahl 12 entlang einer Sensorachse B ausgibt. Der THz-Sensor 1 ist in einer Schwenkachse C, die insbesondere senkrecht durch die Sensorachse B verläuft, um einen Sensor-Korrekturwinkel α schwenkbar in der Sensoraufnahme 2 aufgenommen. Figur 2 und 3 zeigen die Anordnung mehrerer THz-Sensoren 1 auf einer Messaufnahme 6, die insbesondere kreisförmig ausgebildet ist, wobei in Fig. 2 und 3 verschiedenen Sensor-Korrekturwinkel α des mittleren THz-Sensors 1 gezeigt sind. Der THz-Sensor 1 ist somit in einer Messebene 7 schwenkbar, die durch die mehreren THz-Sensoren 1 und die Messaufnahme 6 definiert ist, d. h. insbesondere sind sämtliche THz-Sensoren 1 in der gleichen Messebene 7 schwenkbar, wie nachfolgend weiter beschrieben wird.

Hierbei wird ein Sensormodul 27 gebildet aus Sensor 1, Sensoraufnahme 2, einer Verstelleinrichtung 25, die insbesondere ein elektrischer Kleinstmotor sein kann und zum Schwenken des Sensors 1 in der Sensoraufnahme 2 dient, sowie einer Leitung 28 und einem Stecker 29, mit dem die Sensormodule 27 jeweils austauschbar in der der Messaufnahme 6 aufgenommen sind und bei Ausfall separat, auch während des Betriebes, ausgetauscht werden können. Die mehreren THz-Sensoren 1 geben Ihre Messsignale als Signalamplituden Sa über die Leitungen 28 an die zentrale Steuereinrichtung 30 aus, wobei die Steuereinrichtung 30 wiederum die Sensormodule 27 zur Verstellung der Verstelleinrichtungen 25 ansteuert, um individuelle Sensor-Korrekturwinkel α einzustellen.

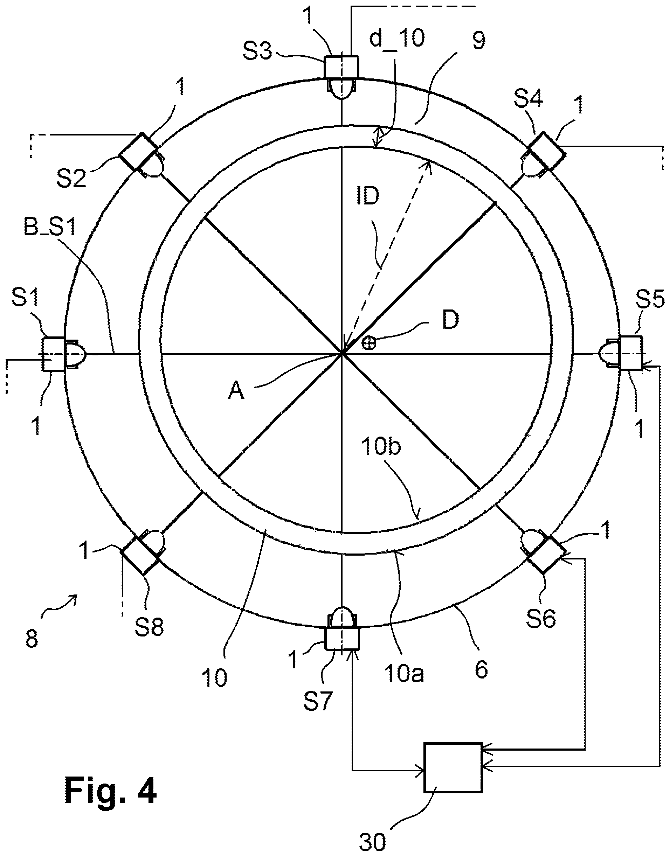

Figur 4 zeigt eine THz-Messvorrichtung 8 als Aufsicht auf die Messebene 7. Die mehreren THz-Sensoren 1, gemäß dieser Ausführungsform acht THz-Sensoren 1, sind jeweils mit ihrer Sensorachse B auf eine Symmetrieachse A gerichtet, die zentral in dem zwischen den THz-Sensoren 1 definierten Messraum 9 ausgebildet ist, d.h. insbesondere im geometrischen Mittelpunkt der kreisförmigen Messaufnahme 6. Die Symmetrieachse A verläuft somit senkrecht durch die Messebene 7; insbesondere verlaufen somit die Schwenkachsen C jeweils parallel zu der Symmetrieachse A.

In dem Messraum 9 ist ein Messobjekt 10 aufgenommen, das hier ein einwandiges Kunststoffrohr 10 ist, das gemäß der hier gezeigten Ausbildung eine ideale Zylinderform aufweist, d. h. mit zylindrischer Außenfläche 10a und Innenfläche10b. Das Messobjekt 10 ist bei idealer Positionierung im Messraum 9 zentral bzw. symmetrisch aufgenommen, so dass ein Rohrmittelpunkt D bzw. die Symmetrieachse des Messobjektes 10 auf die Symmetrieachse A fällt. Wie in Figur 4 bereits gezeigt, wird das Messobjekt 10 jedoch im Allgemeinen eine Fehlpositionierung aufweisen, so dass der Rohrmittelpunkt D bzw. Mittelpunkt des Messobjektes 10 nicht mit der Symmetrieachse A zusammenfällt.

Somit ist zum einen der Abstand der Außenfläche 10a zu den THz-Sensoren 1 unterschiedlich; diese Dezentrierung ist jedoch für eine Schichtdickenvermessung als solche zunächst nicht problematisch, da nachfolgend ohnehin die relativen Abstände der Grenzflächen des Rohres 10, d. h. der Außenfläche 10a und Innenfläche 10b gemessen werden. Weiterhin verlaufen jedoch die Sensorachsen B im Allgemeinen nicht senkrecht zu der Außenfläche 10a und der Innenfläche 10b, sodass entsprechend durch Messung entlang der Sensorachsen B nicht die genauen Schichtdicken als senkrechte Schichtdicken bzw. kürzeste Abstände zwischen den Flächen 10a, 10b gemessen werden kann, und weiterhin auch die an der Außenfläche 10a und Innenfläche 10b reflektierten THz-Reflexionsstrahlen nicht entlang der Sensorachsen B zu den THz-Sensoren 1 zurück reflektiert werden.

Daher werden die THz-Sensoren 1 jeweils um individuelle Korrekturwinkel α in der Messebene 7 geschwenkt, um hierdurch senkrecht auf die Außenfläche 10a ausgerichtet zu werden. Hierbei wird erkannt, dass grundsätzlich eine Kalibrierung auf einen senkrechten Verlauf der Sensorachse B zur Außenfläche 10a ausreichend ist, und insbesondere auch bei derartigen Messobjekten wie einem Rohr 10 die Innenflächen 10b durch unterschiedliche, nicht ideale, jedoch in den Messungen grundsätzlich zu ermittelnde Effekte wie z. B. ein Setzen bzw. Sagging des Rohrmaterials Formänderungen aufweisen können.

Gemäß dem Verfahren zur Ausrichtung der THz-Sensoren 1 wird somit weder das Rohr 10 noch die Messvorrichtung 1 verstellt, sondern lediglich die THz-Sensoren 1 um individuelle Sensor-Korrekturwinkel α geschwenkt, wodurch nachfolgend eine hinreichend genaue THZ-Messung möglich ist.

Gemäß Figur 4 werden die THz-Sensoren 1 zunächst in zwei Sensorgruppen G1 und G2 unterteilt, die eine sukzessive bzw. iterative Korrektur die einzelnen Gruppen ermöglichen. Gemäß der hier gezeigten Ausführungsform mit acht THz-Sensoren 1 werden die Gruppen G1, G2 durch alternierende Unterteilung in Umfangsrichtung gebildet; somit ist in der ersten Sensorgruppe G1 der Sensor S1 an einer Ausgangsstellung, die nachfolgend als 0° Winkelstellung gegenüber der Symmetrieachse A bezeichnet wird, weiterhin der dritte Sensor S3 bei einer Winkelstellung 90°, der fünfte Sensor S5 bei einer Winkelstellung 180°, d. h. gegenüberliegend dem ersten Sensor S1, und dem siebten Sensor S7 bei einer Winkelstellung von 270°, d. h. gegenüberliegend zum dritten Sensor S3 gebildet. Die zweite Sensorgruppe G2 wird durch die anderen vier THz-Sensoren 1 gebildet, d. h. die Sensoren S2, S4, S6 und S8 bei den entsprechenden Winkelstellungen von 45°, 135°, 215° und 315°.

In einem ersten Kalibrierverstellungschritt KS1 dient die erste Sensorgruppe G1 als Ausgangsgruppe und die zweite Sensorgruppe G2 als Verstellgruppe. Somit misst in dieser Ausgangsposition der Figur 4 jeder THz-Sensor 1 der ersten Sensorgruppe G1 jeweils in seiner Ausgangsposition, in der er mit seiner Sensorachse B auf die Symmetrieachse A gerichtet ist, den Ausgangsabstand d0 zur Außenfläche 10a, d.h. es werden Ausgangsabstände d0-S1, d0-S3, d0-S5, d0- S7 gemessenen und gespeichert. Der so gemessene Ausgangsabstand d0 definiert somit für jeden THz-Sensor S1, S3, S5, S7 der ersten Sensorgruppe G1 auch einen Abstandspunkt P1, P3, P5, P7 auf der Außenfläche 10a, der sich als Schnittpunkt seiner Sensorachse B mit der Außenfläche 10a ergibt. Da die - hier in der Ausgangsposition noch radial verlaufenden - Sensorachsen B bekannt sind, können somit mit den bekannten Positionen der THz-Sensoren S1, S3, S5, S7 der ersten Sensorgruppe G1, ihren Schwenkachsen B und den gemessenen Ausgangsabständen d0-S1, d0-S2, ... d0- S7 die Positionen bzw. Koordinaten der Abstandspunkte P1, P3, P5, P7 ermittelt werden. Für z.B. den ersten THz-Sensor S1 ergibt sich der erste Abstandspunkt P1 aus der Position des ersten THz-Sensors S1 (auf der Messaufnahme 6), dem von ihm gemessenen Ausgangsabstand d0-S1 und seiner Sensorachse B_S1.

Eine Messung des Abstandes der Außenfläche 10a ist im Allgemeinen auch noch bei einer geringen Fehl-Positionierung möglich, da der Reflektionsstrahl auch bei einer entsprechenden Fehlstellung noch eine hinreichende Intensität bzw. Signalamplitude aufweist.

Nachfolgend werden die Sensor-Korrekturwinkel α der THz-Sensoren 1 der zweiten Sensorgruppe G2 ermittelt, d.h. die Korrekturen zur Anfangs-Ausrichtung. Hierbei wird erkannt, dass aus einer Abstandsmessung zweier nicht direkt benachbarter THz-Sensoren 1, insbesondere eines THz-Sensors und des übernächsten THz-Sensors, die Winkelstellung des dazwischen liegenden THz-Sensors 1 bereits in sehr guter Näherung auf eine senkrechte Ausrichtung korrigiert sein kann. Eine derartige Korrektur ist insbesondere bei einer runden Außenfläche 10a bereits sehr effektiv, und wird durch eine iterative Vorgehensweise, insbesondere auch durch sukzessive Wiederholung, weiter verbessert.

Insbesondere bei der gezeigten Ausführungsform mit acht THz-Sensoren 1 ist zwischen einem ersten THz-Sensor S1 und einem dritten THz-Sensor S3 bzw. allgemein seinem übernächsten THz-Sensor 1 ein Kreisbogen ausgebildet, der eine sehr genaue Positionierung des dazwischen liegenden THz-Sensors 1, hier somit des zweiten THz-Sensors S2 auf die Außenfläche 10a ermöglicht.

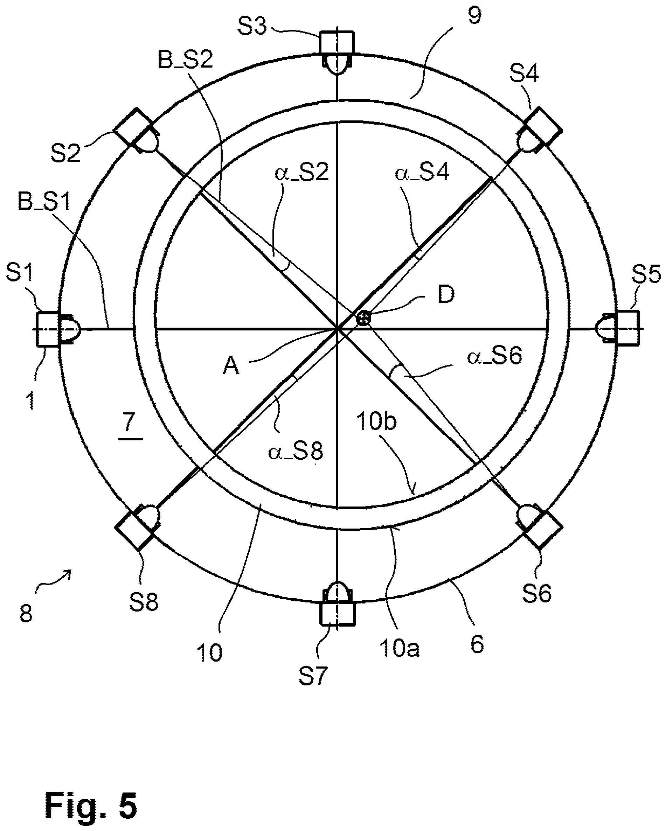

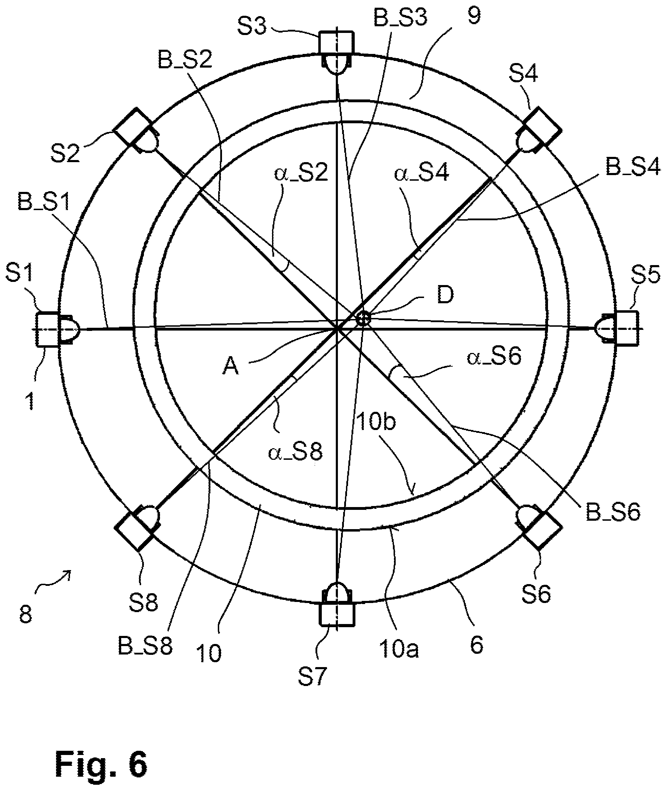

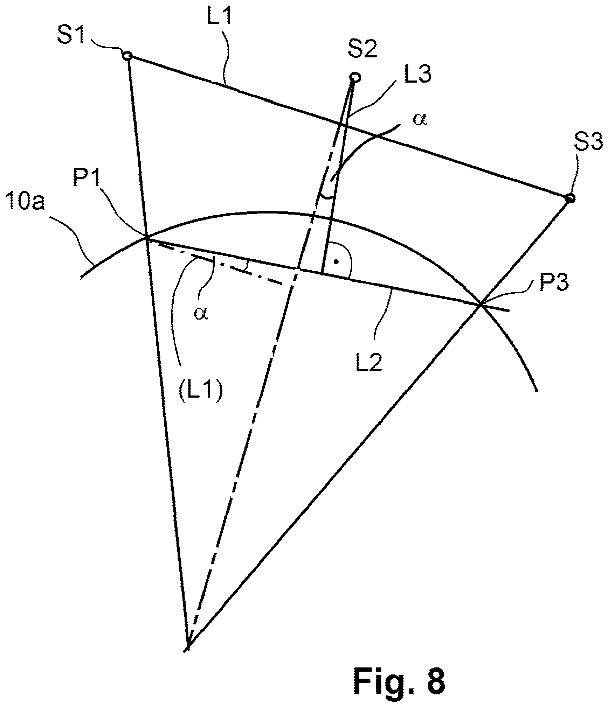

Hierzu wird gemäß einer vorteilhaften Ausbildung, die insbesondere in Figur 5, 6 und dem Diagramm der Figur 8 eingezeichnet ist, in der Messebene 7 zwischen zwei übernächsten, zur THz-Sensoren 1 der ersten Gruppe G1, hier somit dem ersten Sensor S1 und dem dritten Sensor S3, eine gerade Grundlinie L1 gezogen, vorteilhafterweise durch die Schwenkpunkte bzw. Schwenkachsen C der Sensoren S1 und S3. Weiterhin wird zwischen dem ersten Abstandspunkt P1 des ersten Sensors S1 und dem dritten Abstandspunkt P3 des dritten Sensors S3 eine gerade Ausgleichslinie L2 gezogen. Aus diesen Linien L1, L2 und der Position des zweiten Sensors S2 kann nunmehr sein Sensor-Korrekturwinkel α _S2 ermittelt werden.

Bei zentraler Ausrichtung eines zylindrischen Rohres 10 sind somit grundsätzlich die Grundlinie L1 und Ausgleichlinie L2 parallel; bei Abweichungen ergibt sich ein Linienschnittwinkel β zwischen den Linien L1, L2. Der Linienschnittwinkel β ist ein direkter Indikator für den Sensor- Korrekturwinkels α _S2, d.h. diese Winkel α _S2, β können insbesondere gleich gesetzt werden.

Hierbei kann der Sensor- Korrekturwinkel α _S2 direkt als Funktion ermittelt werden, z.B. durch vorgespeicherte Tabellen aus den Abstandspunkten P1, P3 der aufeinanderfolgenden THz-Sensoren S1, S3 jeder Sensorgruppe.

Weiterhin ist auch eine geometrische Ermittlung möglich, wie aus Fig. 5, 7 und 8 ersichtlich ist: Hierbei kann von der Ausgleichslinie L2 ausgehend eine Linien-Orthogonale L3 gelegt wird und diese entlang der Ausgleichslinie L2 derartig verschoben bzw. positioniert wird, dass die Linien-Orthogonale L3 durch den zweiten Sensor S2 bzw. dessen Schwenkpunkt C verläuft, wie in Figur 8 gezeigt ist. Diese Position wird somit im Allgemeinen nicht-mittig auf der Ausgleichslinie L2 liegen. Diese Ausrichtung kann direkt als neue, korrigierte Sensorachse B_S2 des zweiten Sensors S2 herangezogen werden.

Somit ist die Ermittlung der Winkelkorrektur des zweiten Sensors S2 gemäß diesem Verfahrensschritt abgeschlossen. Entsprechend werden die Sensor-Korrekturwinkel α_S4, α_S6 und α_S8 der anderen THz- Sensoren S4, S6 und S8 der zweiten Sensorgruppe S2 jeweils ermittelt durch eine entsprechende Berechnung bzw. geometrische Auslegung der jeweils benachbarten THz-Sensoren 1 der ersten Gruppe G1. Somit wird der Sensor-Korrekturwinkel α-S4 durch die Grundlinie L1 zwischen dem dritten Sensor S3 und fünften Sensor S5, sowie der entsprechenden Ausgleichslinie L2 der Abstandspunkte P3 und P5 auf der Außenfläche 10a ermittelt, und entsprechend die weiteren Sensor-Korrekturwinkel α_S6 und α_S8.

Nachfolgend werden die THz- Sensoren S2, S4, S6 und S8 der zweiten Sensorgruppe S2 um ihre ermittelten Sensor-Korrekturwinkel α_S2, α_S4, α_S6 und α_S8 geschwenkt.

Nach dieser Korrektur sind idealerweise somit die THz-Sensoren S2, S4, S6 und S8 der zweiten Sensorgruppe G2 bereits auf die Rohr- Mittelachse D bzw. den Mittelpunkt des Rohres 10 ausgerichtet. Nachfolgend erfolgt die Kalibrierverstellung der Sensoren der ersten Sensorgruppe G1 als Verstellgruppe, indem die zuvor kalibrierverstellten THZ-Sensoren S2, S4, S6, S8 der zweiten Sensorgruppe G2 als Ausgangsgruppe dienen. Somit werden Abstandsmessungen der Ausgangsabstände d0_S2, d0_S4, d0_S6 und d0_S8, und hieraus mit den bekannten korrigierten Ausrichtungen der Sensorachsen B_S2, B_S4, B_S6, B_S8 entsprechend auch die Koordinaten bzw. Vektoren der Abstandspunkte P2, P4, P6 und P8 ermittelt. Aus diesen Abstandspunkten P2, P4, P6 und P8 werden dann wiederum die Ausgleichslinien L2 ermittelt, wobei die Grundlinien L1 durch die Sensorpositionen unverändert sind. Somit kann für jeden Sensor der ersten Sensorgruppe G1 jeweils aus L1 und L2 sein Sensor-Korrekturwinkel gemäß dem oben beschriebenen Verfahren ermittelt werden.

Nachfolgend werden dann entsprechend die THz-Sensoren S1, S3, S5 und S7 der ersten Sensorgruppe G1um ihre Sensor-Korrekturwinkel α_1, α_3, α_5, α_7 geschwenkt.

Es zeigt sich, dass insbesondere bei einem Rohr 10 mit ganz oder im Wesentlichen kreisrunder Außenfläche 10a und relativ geringfügiger Deplatzierung seiner Mittelachse D gegenüber der Symmetrieachse A bereits ein einmaliger Durchlauf, d.h. zwei alternierende Kalibrierschritte, d. h. eine Verstellung der THz-Sensoren 1 der zweiten Sensorgruppe G2 und nachfolgende entsprechende Verstellung und Korrektur der THz-Sensoren 1 in Sensorgruppe G1 ausreicht, um eine sehr gute Ausrichtung zu erhalten. Bei grö-ßeren Fehlstellungen und insbesondere auch bei nicht-runden Außenflächen 10a kann insbesondere eine iterative Durchführung dieses Verfahrens zu einer sukzessiven weiteren Verbesserung führen. Somit wird nach einmaligem Durchlaufen des Verfahrens ein erneutes Korrekturverfahren durchgenommen, bei dem somit wiederum zunächst wie oben beschrieben die THz-Sensoren 1 der zweiten Sensorgruppe G2 verstellt werden in Abhängigkeit der Messungen der THz-Sensoren 1 der ersten Sensorgruppe G1, usw.

Bei der gezeigten Ausführungsform sind acht THz-Sensoren 1 auf der kreisrunden Messaufnahme, d. h. dem Kreisumfang U, angeordnet, so dass ein Sensor und sein übernächster Sensor unter 90° zueinander ausgerichtet sind und bereits hierdurch der Kreisbogen zwischen ihnen, in denen der zweite Sensor S2 vorgesehen ist, relativ klein ist. Bei einer Ausführungsform mit weniger THz-Sensoren 1, z. B. auch nur vier THz-Sensoren 1, ist hingegen ein iteratives Wiederholen des Verfahrens, d. h. ein mehrmaliger Durchlauf, besonders vorteilhaft.

Hierbei zeigt sich, dass eine derartige Schwenkverstellung auch gegenüber einer translatorischen Verstellung des gesamten Rohres 10, oder auch der Messaufnahme 6 bzw. der gesamten THz-Messvorrichtung 1 schnell und vorteilhaft durchzuführen ist, da lediglich jeweils der THz-Sensor 1 nur um einen kleinen Sensor-Korrekturwinkel α zu schwenken ist, mit kleinem Trägheitsmoment der THz-Sensoren 1. Die Korrekturen der THz-Sensoren 1 der zweiten Sensorgruppe G2 und der ersten Sensorgruppe G1 können hierbei entsprechend simultan jeweils durchgeführt werden, so dass zwei Verstellvorgänge für die Sensorgruppen G1, G2 vorgesehen sind.

Die Kalibrierung uns insbesondere auch Berechnung der Sensor-Korrekturwinkel mittels der Ausgleichslinie L2 kann auch bei Flachstellen oder Ovalitäten erfolgen, gleich ob das Rohr zentrisch oder dezentrisch in der Messvorrichtung vorliegt. Der ermittelte Sensor-Korrekturwinkel α_S2 kann immer in Abhängigkeit der benachbarten Sensoren S1, S3 eingestellt werden. Dies erfolgt in hinreichender Genauigkeit, eine kleine Winkelfehllage verbleibt grundsätzlich aus der geometrischen Abhängigkeit von Krümmung und Zentrum der Sensoranordnung. Diese wird erfindungsgemäß jedoch als vernachlässigbar bewertet, da das Verfahren der Kalibrierung eine schnelle und genaue Ermittlung ermöglicht und allgemein bei nicht-runden dezentrierten Messobjektes 10 keine direkte und genaue Ermittlung eines Mittelpunktes D möglich ist. Insbesondere wird erfindungsgemäß erkannt, dass das Verfahren der Kalibrierung so exakt ist, dass eine Messbarkeit der Wanddicke erzielt werden kann. Weiterhin ermöglicht die schnelle Verstellung der THz-Sensoren 1 eine schnellere Anpassung an Fehllagen und Deformationen als z.B. translatorische Verstellungen der THz-Messvorrichtung, was bei einem durch den Messraum 9 geführten Messobjekt 10, das somit während der Verstellung nicht angehalten werden kann, wiederum die Genauigkeit gegenüber z.B. langsameren translatorischen Verstellungen erhöht.

Zusätzlich zu der Winkelkorrektur um den Sensor-Korrekturwinkel α kann bei allen Ausführungsformen eine Amplitudenkorrektur vorgenommen werde, die die Winkelfehllage weiter reduziert.

Nach der Kalibrier-Verstellung der THz-Sensoren 1 kann eine Feinjustierung durch Schwenken der einzelnen THz-Sensoren 1 erfolgen, bei denen diese von ihrer so zuvor ermittelten Winkelstellung aus in beide Winkelrichtungen um kleine Verstell-Winkel αv verstellt werden, und die unverstellte Messung und die Messung mit den beiden oder mehreren Verstell-Winkeln αv miteinander dahingehend verglichen werden, dass die Position mit der höchsten Signalamplitude Sa_max ermittelt wird. Hierbei zeigt diese Messung mit der höchsten Signalamplitude Sa_max im Allgemeinen den direkten lotrechten bzw. senkrechten Abstand zu der Außenfläche. Diese Feinjustierung durch Maximalwertermittlung ist auch vorteilhaft bei lokalen und z. B. geometrisch undefinierten Flach- und Fehlstellen.

Weiterhin kann bei der Feinjustierung ergänzend auch der Abstand zur inneren Grenzfläche, d. h. der Innenfläche 10b, herangezogen werden. So können von der Grundstellung ausgehend die Abstände d jedes THz- Sensors 1 zur Außenfläche 10a und Innenfläche 10b ermittelt werden, dann die kleinen Verstell-Winkel αv vorgenommen werden und für jeden THz-Sensor 1 die Signale verglichen werden, um die lotrechte Stellung zu ermittelt und einzustellen. Grundsätzlich kann diese Feinjustierung durch kleine Winkelkorrekturen sukzessive durchgeführt werden, bis eine senkrechte Position jedes THz-Sensors 1 ermittelt worden ist, d. h. bis ein Maximum im Messsignal zurückgesendet wird.

Die Feinjustierung ergänzt sich in besonderer Weise mit der vorab erfolgten alternierenden Kalibrierung, da die Verstellungen der Feinjustierung nur noch gering sind. Hierbei kann die Winkellage mit der höchsten Signalamplitude für jeden Sensor von der idealen senkrechten, auf der Außenfläche 10a referierten Winkellage abweichen; hierbei ermöglichen jedoch dann diese korrigierten Winkel eine bestmögliche Durchmessung der Wanddicke.

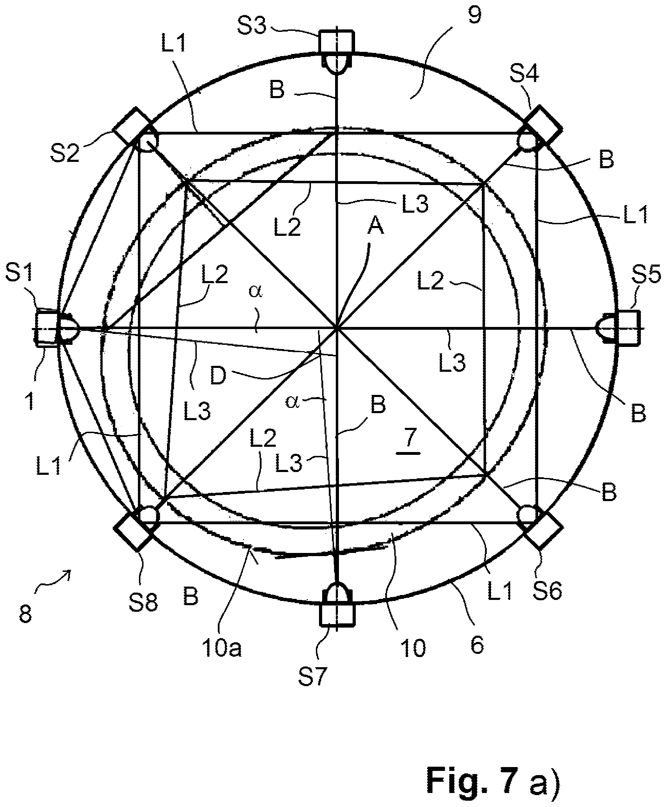

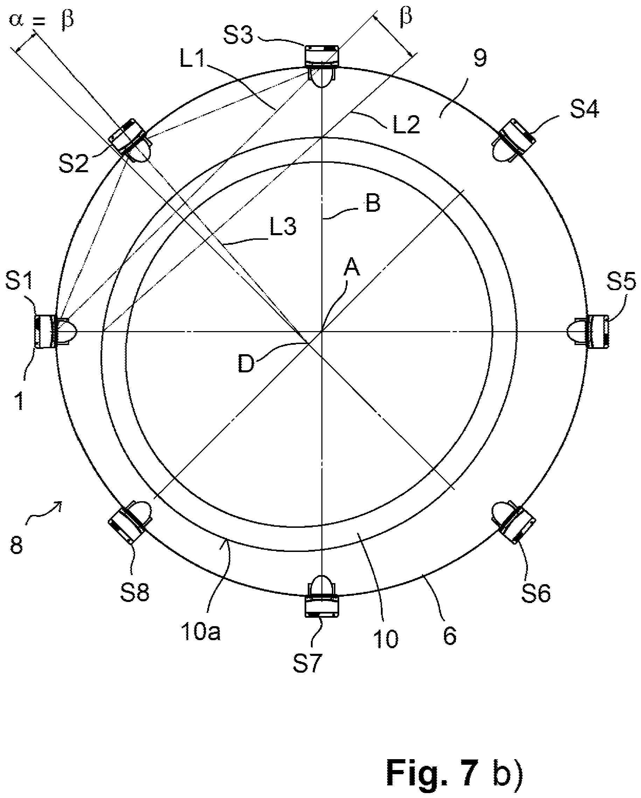

Figur 7a) und b) zeigt die Vermessung eines Messobjektes 10 mit grö-ßerer Ovalität bzw. nicht-runder Ausbildung, wobei entsprechend weiterhin auch eine Deplatzierung seiner Mittelachse D gegenüber der Symmetrieachse A vorliegen kann. Auch hier kann das erfindungsgemäße Verfahren vorteilhaft durchgeführt werden. So können z. B. die THz-Sensoren 1 mit einer Abweichung von 1,5° Winkelfehllage positioniert werden, wobei eine zusätzliche Amplitudenkorrektur dies auf nahezu 0° Winkelfehllage reduzieren kann. Fig. 7a) entspricht somit der Fig. 6; Fig. 7b) zeigt zur besseren Veranschaulichung eine Vereinfachung mit nur einigen relevanten Linien. Hierbei sind zwecks besser Übersichtlichkeit nur die Sensoren S1, S2, S3 mit einigen Hilfslinien versehen. Die beiden außenliegenden Sensoren S3 und S1 liegen somit in Ausrichtung zur Symmetrieachse A, und aus den von ihnen gemessenen Abständen zum Rohr 10 die wird die Ausgleichslinie L2 und somit der Linienschnittwinkel β zur Grundlinie gebildet, der somit der avisierte Korrekturwinkel für den in der Mitte befindlichen Sensor S2 ist.

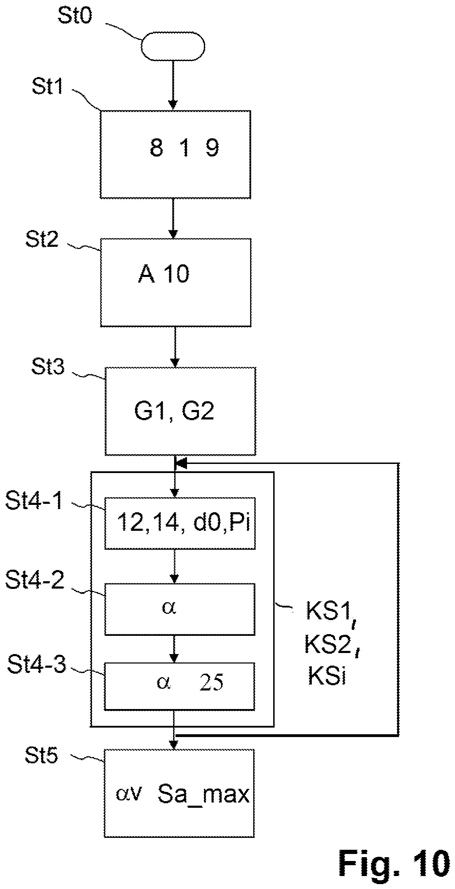

Das Kalibrierverfahren gemäß der oben beschriebenen Ausführungsform kann somit gemäß Fig. 10 dargestellt werden mit den Schritten:
Start in Schritt St0,
Bereitstellungsschritt St1 der THz-Messvorrichtung 8 mit den um den Messraum 9 angeordneten, schwenkbaren THz-Sensoren 1
Ausrichtungsschritt St2 in Ausgangsposition,
Gruppenbildungsschritt St3 mit der Zuordnung der THz-Sensoren 1 in die zwei Sensorgruppen G1, G2,
nachfolgend die beiden sukzessiv aufeinander folgenden mindestens zwei Kalibrierverstellungsschritte KS1, KS2, bei denen jeweils eine der Sensorgruppen Ausgangsgruppe und die andere die Verstellgruppe ist,
mit jeweils den Schritten:
   St4-1 Ermittlung der Abstandspunkte auf der Außenfläche 10a, d.h. im ersten Kalibrierverstellungsschritt KS1 der ersten Abstandspunkte P1, P3, P5, P7,
   St4-2 Ermittlung der Sensor-Korrekturwinkel α der THz-Sensoren der Verstellgruppe mittels der von der Ausgangsgruppe ermittelten Abstandspunkte, d.h.
   im ersten Kalibrierverstellungsschritt KS1 der Sensor-Korrekturwinkel α der THz-Sensoren S2, S4, S6, S8,
   St4-3 Verstellung der die THz-Sensoren (S2, S4, S6, S8) der Verstellgruppe um die ermittelten Sensor-Korrekturwinkel,
wobei diese Kalibrierverstellung mindestens zweimal zur wechselseitigen sukzessiven Verstellung beider Gruppen G1, G2 durchlaufen wird, gegebenenfalls aber auch 4mal oder 6mal,... durchlaufen wird,
und vorzugsweise anschließend der Feinjustierungsschritt St5 unter Maximalwertermittlung Sa_max der Signalamplitude Sa durch kleine Verstell-Winkel αv der einzelnen THz-Sensoren, unabhängig voneinander, durchgeführt wird.

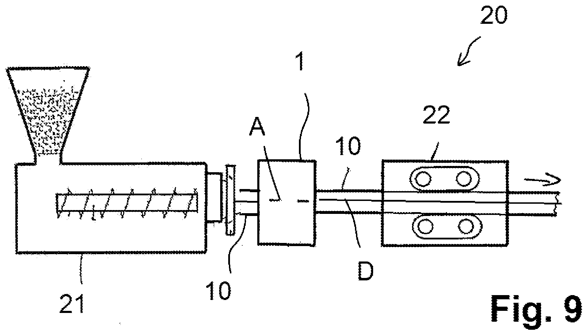

Figur 9 zeigt eine Anordnung 20 einer Herstellungsvorrichtung 21, z. B. eines Extruders, der das Rohr 10 extrudiert und ausgibt, wobei dieses Rohr 10 aus Kunststoff oder Gummi entsprechend noch weich ist und somit durchbiegen und durchhängen kann und somit seine Mittelachse D variiert und schwanken kann. Das Rohr 10 wird durch die Führungseinrichtung 20 durch die THz-Messvorrichtung 8 geführt, wobei hier keine translatorische Verstellung der THz-Messvorrichtung 8 vorgesehen ist, sondern die oben beschriebene Winkelkorrektur der einzelnen THz-Sensoren 1. Vorteilhafterweise ist hier auch entsprechend keine Verstellung des Rohres 10 durch die Führungseinrichtung 22 erforderlich.

Somit kann nach der Kalibrierung das Rohr 10 vermessen werden, insbesondere können die Schichtdicke d_10 als Abstand zwischen der Außenfläche 10a und Innenfläche 10b in Umfangsrichtung durchmessen werden, weiterhin der Innendurchmesser ID des Rohres 10 aus den verschiedenen Messrichtungen. Dieses Messverfahren kann somit insbesondere durchgeführt werden, um nach der Extrusion das Rohr 10 als Messobjekt auf die Einhaltung vorgegebener Toleranzwerte zu überprüfen.

### Bezugszeichenliste

- 1: THz-Sensor
- 2: Sensoraufnahme
- 3: THz-Chip
- 4: Sensorlinse
- 6: Messaufnahme
- 7: Messebene
- 8: THz-Messvorrichtung
- 9: Messraum
- 10: Messobjekt, z. B. Kunststoffrohr
- 10a: Außenfläche des Messobjektes 10
- 10b: Innenfläche des Messobjektes 10
- 12: THz-Sendestrahl
- 14: THz-Reflexionsstrahl
- 20: Anordnung
- 21: Herstellvorrichtung, Extruder
- 22: Führungseinrichtung zum Führen des Rohres 10
- 25: Verstelleinrichtung, z.B. elektrischer Kleinstmotor
- 27: Sensormodul aus Sensor 1, Sensoraufnahme 2,
- 28: Leitung
- 29: Stecker
- 30: Steuereinrichtung, z.B. als zentrale Steuereinrichtung
- A: Symmetrieachse der THz-Messvorrichtung 8
- B: Sensorachse des THz-Sensors 1 bzw. der mehreren Sensoren S1 bis S8
- C: Schwenkachse des THz-Sensors in der Sensoraufnahme 2
- D: Mittelpunkt des Messobjektes 10 bzw. seiner Außenfläche 10a, z.B. Symmetrieachse der Außenfläche 10a
- d0: Ausgangsabstand
- G1: erste Sensorgruppe
- G2: zweite Sensorgruppe
- L1: Grundlinie
- L2: Ausgleichslinie (Ausgangslinie)
- L3: Linien-Orthogonale auf L2 durch Sensor der anderen Gruppe
- S1 bis S8: Sensoren in Fig. 6, 7a,b)
- P1, ... P8: Abstandspunkte
- α: Sensor-Korrekturwinkel
- β (L1, L2): Linienschnittwinkel
- U: Kreisumfang der Messaufnahme 6
- D: Mittelachse des Rohres 10
- L3: Linien-Orthogonale
- ID: Innendurchmesser
- d_10: Schichtdicke

## Patentansprüche

1. Verfahren zur Kalibrierung einer THz-Messvorrichtung (8) auf ein Messobjekt (10), mit mindestens folgenden Schritten:
Bereitstellen einer THz-Messvorrichtung (8) mit mehreren, in einer Umfangsrichtung um einen Messraum (9) angeordneten, schwenkbaren THz-Sensoren (1) zur Ausgabe jeweils eines THz-Sendestrahls (12) und Empfang eines THz-Reflektionsstrahls (14) entlang einer Sensorachse (B), ,
Ausrichten der THz-Sensoren (1) in eine Ausgangsposition in den Messraum (9), in dem ein Messobjekt (10) aufgenommen ist,
Zuordnung der THz-Sensoren (1) in mindestens eine erste Sensorgruppe (G1) und zweite Sensorgruppe (G2),
erster Kalibrierverstellungsschritt (KS1), bei dem die zweite Sensorgruppe (G2) als Verstellgruppe mittels der ersten Sensorgruppe (G1) als Ausgangsgruppe verstellt wird,
zweiter Kalibrierverstellungsschritt (KS2), bei dem die erste Sensorgruppe (G1) als Verstellgruppe mittels der zuvor kalibrierverstellten zweiten Sensorgruppe als Ausgangsgruppe verstellt wird,
wobei in den Kalibrierverstellungsschritten (KS1, KS2) jeweils
= mit den THz-Sensoren (S1, S3, S5, S7) der Ausgangsgruppe (G1) Abstandspunkte (P1, P3, P5, P7) auf einer Fläche (10a) des Messobjektes (10) ermittelt werden (St4-1)
= Sensor-Korrekturwinkel (α) der THz-Sensoren (1; S2, S4, S6, S8) der Verstellgruppe mittels der von der Ausgangsgruppe ermittelten Abstandspunkte (P1, P3, P5, P7) ermittelt werden, (St4-2),
= die THz-Sensoren (S2, S4, S6, S8) der Verstellgruppe um die ermittelten Sensor-Korrekturwinkel (α) kalibrierverstellt werden (St4-3).

2. Verfahren nach Anspruch 1, **dadurch gekennzeichnet, dass** die Abstandspunkte ermittelt werden, indem
der THz-Sensor (S1, S3, S5, S7) der Ausgangsgruppe einen Ausgangsabstand (d0) zu der Fläche (10a), insbesondere Außenfläche (10a), des Messobjektes (10) misst (St4-1) und
aus dem ermittelten Ausgangsabstand (d0) und der Ausrichtung seiner Sensorachse (B) der Abstandspunkt (P1, P3, P5, P7) als Schnittpunkt der Sensorachse (B) und der Fläche (10a) ermittelt wird (St4-2).

3. Verfahren nach Anspruch 1 oder 2, **dadurch gekennzeichnet, dass** die THz-Sensoren (1) der ersten Sensorgruppe (G1) und der zweiten Sensorgruppe G2) in Umfangsrichtung alternierend angeordnet sind.

4. Verfahren nach einem der vorherigen Ansprüche, **dadurch gekennzeichnet, dass** in der Ausgangsposition die THz-Sensoren (1) auf einem Kreisumfang (U) einer Messaufnahme (6) angeordnet und/oder zentral oder radial auf eine gemeinsame Symmetrieachse (B) oder Mittelpunkt der THz-Messvorrichtung (8), insbesondere den des Kreisumfangs (U), in der Ausgangsposition ausgerichtet sind.

5. Verfahren nach einem der vorherigen Ansprüche, **dadurch gekennzeichnet, dass** der Sensor-Korrekturwinkel (α) eines THz-Sensors (1; S2, S4, S6, S8) der Verstellgruppe mittels der beiden benachbarten, insbesondere ausschließlich mittels der beiden benachbarten THz-Sensoren (S1, S3, S5, S7) der Ausgangsgruppe (G1) ermittelt wird.

6. Verfahren nach Anspruch 5, **dadurch gekennzeichnet, dass** bei der Ermittlung des Sensor-Korrekturwinkels (α) des THz-Sensors der Verstellgruppe
durch die beiden ermittelten Abstandspunkte (P1, P3) der beiden benachbarten THz-Sensoren (S1, S3) der Ausgangsgruppe (G1) eine Ausgangslinie (L2), insbesondere als Gerade, gelegt wird, und
durch die Sensorpositionen (SP1, SP3) der beiden THz-Sensoren der Ausgangsgruppe eine Grundlinie (L1) gelegt wird,
und aus der relativen Lage der Grundlinie (L1) und der Ausgangslinie (L2) der Sensor-Korrekturwinkels (α) des dazwischenliegenden THz-Sensors der Verstellgruppe (S2) ermittelt wird.

7. Verfahren nach Anspruch 6, **dadurch gekennzeichnet, dass** der Sensor-Korrekturwinkel (αr) ermittelt wird in Abhängigkeit eines Schnittwinkels zwischen der Grundlinie (L1) und der Ausgangslinie (L2).

8. Verfahren nach Anspruch 6 oder 7, **dadurch gekennzeichnet, dass** der Sensor-Korrekturwinkel (αr) ermittelt wird durch Bildung einer Orthogonal-Linie (L3), die senkrecht auf der Ausgangslinie (L2) steht und durch die Sensorposition (SP2) des dazwischenliegenden THz-Sensors der Korrekturgruppe (S2) verläuft,
wobei vorzugsweise die Orthogonal-Linie (L3) als korrigierte Sensorachse (B) des dazwischenliegenden THz-Sensors (S2) der Verstellgruppe (G2) genommen wird.

9. Verfahren nach einem der vorherigen Ansprüche, **dadurch gekennzeichnet, dass** nach dem ersten und zweiten Kalibrierverstellungsschritt (KS1, KS2) nachfolgend die Kalibrierverstellungsschritte (KS1, KS2) zumindest einmal iterativ wiederholt werden.

10. Verfahren nach einem der vorherigen Ansprüche, **dadurch gekennzeichnet, dass** in einem nachfolgenden Feinjustierungsschritt (St5)
- jeder THz-Sensor (1) von seiner aktuellen Schwenkstellung ausgehend um seine Schwenkachse (C) geschwenkt wird,
- wobei der THz-Sensor (1) in seiner aktuellen Schwenkstellung und durch Verschwenken in beide Schwenkrichtungen erzeugten Vergleichs-Schwenkstellungen jeweils einen THz-Sendestrahl (2) ausgibt
- jeweils in den Schwenkstellungen die Signalamplitude des von der Fläche (10) des Messobjektes reflektierten THz-Reflektionsstrahls gemessen wird,
- die Signalamplituden der Messungen verglichen werden, und
- eine Messung mit maximaler Signalamplitude feinjustierte Position ermittelt und durch Verstellung des THz-Sensors (1) eingestellt wird.

11. Verfahren nach einem der vorherigen Ansprüche, **dadurch gekennzeichnet, dass** bei der Kalibrierung die THz-Messvorrichtung (1) und/oder das Messobjekt (10) nicht in der Messebene translatorisch relativ zueinander verstellt werden.

12. Verfahren nach einem der vorherigen Ansprüche, **dadurch gekennzeichnet, dass** die THz-Sensoren jeweils, vorzugsweise ausschließlich, verstellt werden, indem sie um eine vorzugsweise auf der Umfangslinie (U) angeordnete, feste Schwenkachse (C), geschwenkt werden.

13. THz-Messverfahren zur Vermessung eines Messobjektes (10),
bei dem eine THz-Messvorrichtung (8) mit einem Verfahren nach einem der vorherigen Ansprüche auf das Messobjekt (10) kalibriert wird, insbesondere zur senkrechten Ausrichtung auf die Außenfläche (10a) des Messobjektes (10), und
nach der Kalibrierung von den mehreren THz-Sensoren (1) durch jeweils Aussenden eines THz-Sendestrahls (12) und Empfangen von an Grenzflächen (10a, 10b) des Messobjektes (10) reflektierten Reflektionsstrahlen (14) Schichtdicken (d_10, ID) des Messobjektes (10), insbesondere eine Wanddicke (d_10) und ein Innendurchmesser (ID)an mehreren Positionen, gemessen werden.

14. THz-Messvorrichtung (8), die aufweist:
eine Messaufnahme (6),
einen Messraum (9) zur Aufnahme eines Messobjektes (10), mehrere, an der Messaufnahme (6) in Umfangsrichtung um den Messraum (9) angeordnete THz-Sensoren (1)
zur Ausgabe jeweils eines THz-Sendestrahls (12), Aufnahme eines THz-Reflektionsstrahls (14) und Ausgabe einer Signalamplitude (Sa) für eine Messung von Laufzeiten und/oder Abständen,
wobei die THz-Sensoren (1) jeweils durch Verstelleinrichtungen (25) der THz-Messvorrichtung (8) auf der Messaufnahme (6) schwenkbar und in einer Ausgangsposition in den zwischen ihnen vorgesehenen Messraum (9) ausgerichtet sind,
eine zentrale oder dezentrale Steuereinrichtung (30) zur Aufnahme der Signalamplituden (Sa) der THz-Sensoren (1) und Ansteuerung der Verstelleinrichtungen (25) zum Schwenken der THz-Sensoren (1),
wobei die Steuereinrichtung (30) ausgebildet oder eingerichtet ist zur Ausführung eines Verfahrens nach einem der vorherigen Ansprüche.

15. THz-Messvorrichtung (8) nach Anspruch 14, **dadurch gekennzeichnet, dass** die THz-Sensoren (1) in einer Messebene /7) angeordnet sind, ihre Sensorachsen (b) in der Messebene (7) verlaufen, und ihre Schwenkachsen (C) senkrecht auf der Messebene (7) stehen zur Verstellung in der Messebene (7), vorzugsweise ohne weitere translatorische oder rotatorische Verstellbarkeit.

16. THz-Messvorrichtung (8) nach Anspruch 15, **dadurch gekennzeichnet, dass** die THz-Sensoren (1) jeweils in einem Sensormodul (17) aufgenommen sind, das den Sensor 1, eine den Sensor (1) aufnehmende Sensoraufnahme 2, die Verstelleinrichtung 25 zum Schwenken des Sensors 1 in der Sensoraufnahme 2, und eine Kontaktiereinrichtung (29) zur elektrischen Kontaktierung des Sensormoduls (17) in der Messaufnahme (6) aufweist, wobei die Sensormodule (27) in der Messaufnahme (6) austauschbar sind, insbesondere auch während des Betriebes der THz-Messvorrichtung (8).

17. Anordnung (20) aus:
einer Herstellvorrichtung (21) zur Herstellung eines ein- oder mehrschichtigen Rohres (10),
einer THz-Messvorrichtung (8) nach einem der Ansprüche 16 bis 18, zum fortlaufenden Vermessen des Rohres (10) in seiner Messebene (7), und
einer Fördereinrichtung (22) zum Fördern des Rohres (10) entlang einer Symmetrieachse (A) durch die THz-Messvorrichtung (8).

## Claims

1. Method for calibrating a THz measuring apparatus (8) to a measurement object (10), including at least the following steps:
providing a THz measuring apparatus (8) having a plurality of pivotable THz sensors (1), arranged in a circumferential direction around a measuring chamber (9), for putting out one transmitted THz beam (12) each and receiving one reflected THz beam (14) along a sensor axis (B),
orienting the THz sensors (1) into a starting position into the measuring chamber (9), in which a measurement object (10) is received,
allocating the THz sensors (1) to at least one first sensor group (G1) and second sensor group (G2),
first calibration adjustment step (KS1), in which the second sensor group (G2) is adjusted as an adjustment group by means of the first sensor group (G1) as a starting group,
second calibration adjustment step (KS2), in which the first sensor group (G1) is adjusted as an adjustment group by means of the previously calibration adjusted second sensor group as a starting group,
wherein in each of the calibration adjustment steps (KS1, KS2)
= by means of the THz sensors (S1, S3, S5, S7) of the starting group (G1), spacing points (P1, P3, P5, P7) on a surface (10a) of the measurement object (10) are determined (St4-1)
= sensor correction angles (α) of the THz sensors (1; S2, S4, S6, S8) of the adjustment group are determined by means of the spacing points (P1, P3, P5, P7) determined by the starting group, (St4-2),
= the THz sensors (S2, S4, S6, S8) of the adjustment group are calibration adjusted about the determined sensor correction angles (α) (St4-3).

2. Method according to claim 1, **characterized in that** the spacing points are determined **in that**
the THz sensor (S1, S3, S5, S7) of the starting group measures a starting distance (d0) from the surface (10a), in particular exterior surface (10a), of the measurement object (10) (St4-1) and,
from the determined starting distance (d0) and the orientation of its sensor axis (B), the spacing point (P1, P3, P5, P7) is determined as an intersection point of the sensor axis (B) and the surface (10a) (St4-2).

3. Method according to claim1 or 2, **characterized in that** the THz sensors (1) of the first sensor group (G1) and of the second sensor group G2) are arranged alternatingly in the circumferential direction.

4. Method according to one of the above claims, **characterized in that** in the starting position the THz sensors (1) are arranged on a circular circumference (U) of a measuring receptacle (6) and/or aligned centrally or radially to a common axis of symmetry (B) or center point of the THz measuring apparatus (8), in particular that of the circular circumference (U), in the starting position.

5. Method according to one of the above claims, **characterized in that** the sensor correction angle (α) of a THz sensor (1; S2, S4, S6, S8) of the adjustment group is determined by means of the two adjacent, in particular, exclusively by means of the two adjacent THz sensors (S1, S3, S5, S7) of the starting group (G1).

6. Method according to claim 5, **characterized in that** upon determining the sensor correction angle (α) of the THz sensor of the adjustment group,
by means of the two determined spacing points (P1, P3) of the two adjacent THz sensors (S1, S3) of the starting group (G1), a balance line (L2), in particular as a straight line, is laid, and
a base line (L1) is laid through the sensor positions (SP1, SP3) of the two THz sensors of the starting group,
and, from the relative position of the base line (L1) and the balance line (L2), the sensor correction angle (α) of the THz sensor of the adjustment group (S2) lying in-between is determined

7. Method according to claim 6, **characterized in that** the sensor correction angle (αr) is determined depending on an intersection angle between the base line (L1) and the balance line (L2).

8. Method according to claim 6 or 7, **characterized in that** the sensor correction angle (αr) is determined by forming an orthogonal line (L3), which is perpendicular to the balance line (L2) and runs through the sensor position (SP2) of the THz sensor of the adjustment group (S2) lying in-between,
where, preferably, the orthogonal line (L3) is taken as a corrected sensor axis (B) of the THz sensor (S2) of the adjustment group (G2) lying in-between.

9. Method according to one of the above claims, **characterized in that** following the first and second calibration adjustment steps (KS1, KS2) the calibration adjustment steps (KS1, KS2) are iteratively repeated at least once.

10. Method according to one of the above claims, **characterized in that** in a subsequent fine adjustment step (St5)
- each THz sensor (1) is pivoted about its swivel axis (C) starting from its current pivot position,
- the THz sensor (1), in its current pivot position and in comparative pivot positions generated by swiveling in both pivoting directions, each outputting a transmitted THz beam (2)
- the signal amplitude of the reflected THz beam reflected from the surface (10) of the measurement object is measured in each of the pivot positions,
- the signal amplitudes of the measurements are compared, and
- a measurement of a fine-adjusted position having a maximum signal amplitude is determined and set by adjusting the THz sensor (1).

11. Method according to one of the above claims, **characterized in that** in performing the calibration the THz measuring apparatus (1) and/or the measurement object (10) are not translationally adjusted in the measuring plane relative to one another.

12. Method according to one of the above claims, **characterized in that** the THz sensors are each adjusted, preferably exclusively, **in that** they are swiveled about a fixed swivel axis (C), preferably arranged on the circumferential line (U).

13. THz measuring method for measuring a measurement object (10),
wherein a THz measuring apparatus (8) is calibrated to the measurement object (10) using a method according to one of the above claims, in particular for attaining a perpendicular orientation towards the exterior surface (10a) of the measurement object (10), and
following the calibration, the plurality of THz sensors (1) measure layer thicknesses (d_10, ID) of the measurement object (10), in particular a wall thickness (d_10) and an interior diameter (ID), at several positions, each by emitting a transmitted THz beam (12) and receiving reflected beams (14) reflected at boundary surfaces (10a, 10b) of the measurement object (10).

14. THz measuring apparatus (8), comprising:
a measuring receptacle (6),
a measuring chamber (9) for receiving a measurement object (10),
a plurality of THz sensors (1) received at the measuring receptacle (6) for outputting each a transmitted THz beam (12), receiving a reflected THz beam (14) and outputting a signal amplitude (Sa) for a measurement of times or flight and/or distances,
said THz sensors (1) each being pivotable on the measuring receptacle (6) by means of adjustment devices (25) of the THz measuring apparatus (8) and, in a starting position, oriented towards the measuring chamber (9) provided between them,
a central or peripheral controller means (30) for receiving the signal amplitudes (Sa) of the THz sensors (1) and controlling the adjustment devices (25) for swiveling the THz sensors (1),
said controller means (30) being designed or adapted for carrying out a method according to one of the above claims.

15. THz measuring apparatus (8) according to claim 14, **characterized in that** the THz sensors (1) are arranged in a measuring plane (7), their sensor axes (b) run in the measuring plane (7), and their swivel axes (C) are perpendicular to the measuring plane (7) for adjustment in the measuring plane (7), preferably without any further translational or rotational adjustability.

16. THz measuring apparatus (8) according to claim 15, **characterized in that** the THz sensors (1) are each received in a sensor module (17) comprising the sensor 1, a sensor receptacle 2 receiving the sensor (1), the adjustment device 25 for swiveling sensor 1 inside the sensor receptacle 2, and a contacting device (29) for electrically contacting the sensor module (17) in the measuring receptacle (6), said sensor modules (27) in the measuring receptacle (6) being replaceable, in particular, even during operation of the THz measuring apparatus (8).

17. Arrangement (20) consisting of:
a manufacturing device (21) for manufacturing a one or multi-layer pipe (10),
a THz measuring apparatus (8) according to one of the claims 16 through 18, for continuously measuring the pipe (10) in its measuring plane (7), and
a transport device (22) for transporting the pipe (10) along an axis of symmetry (A) through the THz measuring apparatus (8).

## Revendications

1. Procédé de calibrage d'un dispositif de mesure en térahertz (8) sur un objet à mesurer (10), ledit procédé comprenant au moins les étapes suivantes :
- fournir un dispositif de mesure en térahertz (8) avec plusieurs capteurs térahertziens (1) pivotants, disposés dans un sens circonférentiel autour d'un espace de mesure (9) pour émettre respectivement un rayon térahertzien émis (12) et recevoir un rayon térahertzien réfléchi (14) le long d'un axe de capteur (B),
- orienter les capteurs térahertziens (1) dans une position de départ dans l'espace de mesure (9), dans lequel est reçu un objet à mesurer (10),
- affecter les capteurs térahertziens (1) à au moins un premier groupe de capteurs (G1) et un deuxième groupe de capteurs (G2),
- première étape de réglage du calibrage (KS1), au cours duquel le deuxième groupe de capteurs (G2), à savoir le groupe de réglage, est réglé au moyen du premier groupe de capteurs (G1), à savoir le groupe de départ,
- deuxième étape de réglage du calibrage (KS2), au cours duquel le premier groupe de capteurs (G2), à savoir le groupe de réglage, est réglé au moyen du deuxième groupe de capteurs, dont le calibrage a été réglé préalablement, à savoir le groupe de départ,
- au cours des étapes de réglage du calibrage (KS1, KS2), des points de distance (P1, P3, P5, P7) étant respectivement déterminés sur une surface (10a) de l'objet à mesurer à l'aide des capteurs térahertziens (S1, S3, S5, S7) du groupe de départ (G1), (ST4-1),
- des angles de correction de capteur (α) des capteurs térahertziens (1 ; S2, S4, S6, S8) du groupe de réglage étant déterminés au moyen des points de distance (P1, P3, P5, P7) déterminés par le groupe de départ, (St4-2),
- le calibrage des capteurs térahertziens (S2, S4, S6, S8) du groupe de réglage étant réglé en fonction des angles de correction de capteur (α) déterminés, (ST4-3).

2. Procédé suivant la revendication 1, **caractérisé en ce que** le capteur térahertzien (S, S3, S5, S7) du groupe de départ détermine les points de distance en mesurant une distance de départ (d0) par rapport à la surface (10a), en particulier par rapport à la surface externe (10a) de l'objet à mesurer, (St4-1), et en déterminant à partir de la distance de départ déterminée (d0) et de l'orientation de son axe de capteur (B) le point de distance (P1, P3, P5, P7) comme point d'intersection de l'axe de capteur (B) et de la surface (10a), (St4-2).

3. Procédé suivant la revendication 1 ou 2, **caractérisé en ce que** les capteurs térahertziens (1) du premier groupe de capteurs (G1) et du deuxième groupe de capteurs (G2) sont disposés de manière alternée dans le sens de la circonférence.

4. Procédé suivant une des revendications précédentes, **caractérisé en ce qu'**en position de départ, les capteurs térahertziens (1) sont disposés sur une circonférence (U) d'un support de dispositif de mesure (6) et/ou orientés centralement ou radialement sur un axe de symétrie commun (B) ou le point central du dispositif de mesure en térahertz (8), en particulier sur celui de la circonférence (U) dans la position de départ.

5. Procédé suivant une des revendications précédentes, **caractérisé en ce que** l'angle de correction de capteur (α) d'un capteur térahertzien (S1 ; S2, S4, S6, S8) du groupe de réglage est déterminé au moyen des deux capteurs térahertziens voisins (S1, S3, S5, S7), en particulier exclusivement au moyen de ces deux capteurs térahertziens du groupe de départ (G1).

6. Procédé suivant la revendication 5, **caractérisé en ce que** lors de la détermination de l'angle de correction (α) du capteur térahertzien du groupe de réglage, une ligne de départ (L2) est placée, notamment comme ligne droite, à travers les deux points de distance déterminés (P1, P3) des deux capteurs térahertziens voisins du groupe de départ (G1), et
une ligne de base (L1) est placée à travers les positions de capteurs (SP1, SP3) des deux capteurs térahertziens du groupe de départ, et
l'angle de correction (α) du capteur térahertzien intermédiaire du groupe de réglage (S2) est déterminé à partir de la position relative de la ligne de base (L1) et de la ligne de départ (L2).

7. Procédé suivant la revendication 6, **caractérisé en ce que** l'angle de correction de capteur (αr) est déterminé en fonction d'un angle de coupe entre la ligne de base (L1) et la ligne de départ (L2).

8. Procédé suivant la revendication 6 ou 7, **caractérisé en ce que** l'angle de correction de capteur (αr) est déterminé en formant une ligne orthogonale (L3) qui est perpendiculaire à la ligne de départ (L2) et s'étend à travers la position de capteur (SP2) du capteur térahertzien intermédiaire du groupe de correction (S2), de préférence la ligne orthogonale (L3) est prise comme axe de capteur (B) corrigé du capteur térahertzien intermédiaire (S2) du groupe de réglage (G2).

9. Procédé suivant une des revendications précédentes, **caractérisé en ce que** suite à la première et la deuxième étape de réglage du calibrage (KS1, KS2), les étapes de réglage du calibrage (KS1, KS2) sont répétées de manière itérative au moins une fois.

10. Procédé suivant une des revendications précédentes, **caractérisé en ce qu'à** une étape ultérieure d'ajustage fin (St5),
- chaque capteur térahertzien (1) est pivoté à partir de sa position de pivotement actuelle autour de son axe de pivotement (C),
- dans sa position de pivotement actuelle et dans des positions de pivotement de comparaison générées par pivotement dans les deux directions de pivotement, le capteur térahertzien (1) émet respectivement un rayon térahertzien émis (2),
- l'amplitude de signal du rayon térahertzien réfléchi par la surface (10) de l'objet à mesurer est respectivement mesurée dans les positions de pivotement,
- les amplitudes de signaux des mesures sont comparées, et
- une position ajustée fin est déterminée par mesure avec une amplitude de signal maximale et réglée par réglage du capteur térahertzien (1).

11. Procédé suivant une des revendications précédentes, **caractérisé en ce que** le dispositif de mesure en térahertz et/ou l'objet à mesurer (10) ne sont pas réglés en translation l'un par rapport à l'autre dans le plan de mesure lors du calibrage.

12. Procédé suivant une des revendications précédentes, **caractérisé en ce que** les capteurs térahertziens sont respectivement, de préférence exclusivement, réglés en les faisant pivoter autour d'un axe de pivotement fixe disposé de préférence sur la ligne circonférentielle (U).

13. Procédé de mesure en térahertz destiné à mesurer un objet à mesurer (10), dans lequel un dispositif de mesure en térahertz (8) est calibré sur l'objet à mesurer (10) suivant un procédé selon une des revendications précédentes (10), en particulier pour une orientation perpendiculaire à la surface externe (10a) de l'objet à mesurer (10), et
ultérieurement au calibrage des plusieurs capteurs térahertziens (1), des épaisseurs de couche (d_10, ID) de l'objet à mesurer (10), notamment une épaisseur de paroi (d_10) et un diamètre interne (ID) sont mesurés en plusieurs positions, respectivement par émission d'un rayon térahertzien émis (12) et réception de rayons de réflexion réfléchis (14) sur des surfaces limites (10a, 10b) de l'objet à mesurer (10).

14. Dispositif de mesure en térahertz (8) présentant :
un support de dispositif de mesure (6),
un espace de mesure (9) destiné à recevoir un objet à mesurer (10),
plusieurs capteurs térahertziens (1) disposés sur le support de dispositif de mesure (6) dans le sens circonférentiel autour de l'espace de mesure (9) pour émettre respectivement un rayon térahertzien (12), recevoir un rayon de réflexion térhertzien (14) et émettre une amplitude de signal (Sa) pour une mesure de durées et/ou de distances,
les capteurs térahertziens (1) étant respectivement orientés par des dispositifs de réglage (25) de manière pivotante sur le support de dispositif de mesure (6) et dans une position de départ dans l'espace de mesure (9) prévu entre eux,
un dispositif de commande centrale ou décentralisée (30) pour recevoir les amplitudes de signaux (Sa) des capteurs térahertziens (1) et commander les dispositifs de réglage (25) pour le pivotement des capteurs térahertziens (1), le dispositif de commande (30) étant formé et conçu pour exécuter un procédé suivant une des revendications précédentes.

15. Dispositif de mesure en térahertz (8) suivant la revendication 14, **caractérisé en ce que** les capteurs térahertziens (1) sont disposés dans un plan de mesure (7), leurs axes de capteurs (b) s'étendent dans le plan de mesure (7) et leurs axes pivotants (C) sont perpendiculaires au plan de mesure (7) pour un réglage dans le plan de mesure (7), de préférence sans autre possibilité de réglage en translation ou rotation.

16. Dispositif de mesure en térahertz (8) suivant la revendication 15, **caractérisé en ce que** les capteurs térahertziens (1) sont respectivement reçus dans un module capteur (17) qui présente le capteur 1, un support de capteur 2 recevant le capteur 1, le dispositif de réglage (25) pour pivoter le capteur 1 dans le support de capteur 2, et un système d'établissement de contact (29) pour la mise en contact électrique du module capteur (17) dans le support de dispositif de mesure (6), les modules capteurs (27) étant échangeables dans le support de dispositif de mesure, notamment aussi en service du dispositif de mesure en térahertz (8).

17. Agencement (20) comportant :
un dispositif de fabrication (21) pour fabriquer un tuyau (10) en une ou plusieurs couches,
un dispositif de mesure en térahertz (8) suivant une des revendications 16 à 18 pour mesurer le tuyau (10) en continu sur son plan de mesure (7), et
un dispositif de convoyage (22) pour convoyer le tuyau (10) le long d'un axe de symétrie (A) à travers le dispositif de mesure en térahertz (8).
